# EUROPEAN PATENT SPECIFICATION

(11) **EP 4 487 733 B1**
(45) Date of publication and mention of the grant of the patent: **17.12.2025**
(21) Application number: 24178544.3
(22) Date of filing: 28.05.2024
(51) Int. Cl.: A47C 7/38, B60N 2/80

(54) **ADJUSTMENT DEVICE FOR A HEADREST**
VERSTELLVORRICHTUNG FÜR EINE KOPFSTÜTZE
DISPOSITIF DE RÉGLAGE POUR UN APPUIE-TÊTE

(30) Priority: 04.07.2023 DE 202023103692 U
(43) Date of publication of application: 08.01.2025
(73) Proprietor: CIAR S.p.A., 61122 Pesaro (PU) (IT)
(72) Inventor: CARRERA, Massimo, 61010 Tavullia (PU) (IT)
(74) Representative: Tetzner, Michael

(56) References cited:
- DE-U1- 202018 104 018
- DE-U1- 202021 100 215

## Description

The invention relates to an adjustment device for a headrest, as used, for example, in a piece of seating or reclining furniture, in particular an armchair or a sofa. In principle, however, other application examples, such as vehicle seats or the like, are also conceivable.

In general, a headrest can be adjusted in both height and inclination to improve the user's comfort. A further improvement in comfort is achieved by a drive device for motor-driven adjustment of the headrest. Electrically adjustable headrests are known, for example, from DE 20 2018 100 399 U1, DE 20 2018 100 158 U1, DE 40 09 127 A1, KR 101600199 B1 or DE 199 83 415 B4. However, the known solutions are often very complex.

An adjustment device for a headrest with a simple and compact design is disclosed in EP 3 616 983 B1 and has substantially the following features:
- a frame,
- an inclination adjustment device with which the inclination of the headrest can be set, wherein the inclination adjustment device comprises at least one support element for attaching the headrest,
- a height adjustment device comprising at least one tube, wherein the support element for attaching the headrest is mounted pivotably about a pivot axis at an end region of the tube and the tube is guided displaceably in the frame so that the headrest can be adjusted in height relative to the frame, and
- at least one drive device connected to the inclination and height adjustment device.

The inclination adjustment device further comprises a rod guided inside the tube, which rod is coupled at one end to the support element, wherein a displacement of the rod relative to the tube causes a pivoting of the support element about the pivot axis and thus an adjustment of the inclination of the headrest. At the end of the tube facing away from the support element, a portion of the rod protrudes from the tube, with the drive device being attached to this portion by means of a displacement element. Furthermore, a spring element is pushed onto the projecting portion, which spring element is supported at one end on the tube and at another end on the displacement element, wherein actuation of the drive device from a lower position of the headrest initially causes a limited displacement of the tube and thus a displacement of the headrest into an upper position and a further actuation of the drive device causes a displacement of the rod relative to the tube while compressing the spring element, whereby the headrest tilts.

This design means that only the tubes of the height adjustment device are visible between the frame, which is usually arranged at the upper end of a backrest, and the headrest, resulting in a very clear and pleasing design on the outside. Due to the rods guided in the tubes for adjusting the inclination of the headrest, no other moving parts of the adjustment device are visible.

DE 20 2021 100 215 U1 discloses an adjustment device for a headrest having at least one first headrest holder for holding the headrest which has a pivoting angle of 140° +/- 20° between an initial position and an end position.

Based on this prior art, the object of the invention was to provide an adjustment device for a headrest which offers further adjustment options while maintaining the simple and compact design.

According to the invention, this object is achieved by the features of claim 1.

The adjustment device for a headrest according to the invention provides the following features:
- a frame,
- a height adjustment device comprising at least one tube, wherein a support element for attaching the headrest is coupled to a first end region of the tube and the tube is guided displaceably in the frame so that the headrest can be adjusted in height relative to the frame,
- an inclination adjustment device comprising a rod guided inside the tube, which rod is coupled at one (upper) end to the support element, wherein a displacement of the rod relative to the tube causes a pivoting of the support element about a pivot axis and thus an adjustment of the inclination of the headrest, and
- at least one drive device for displacing the rod and the tube,
   wherein
- the pivot axis about which the support element can pivot is provided at one (upper) end of the rod,
- the coupling of the support element to the tube takes place via an articulated arm, which is connected in an articulated manner at one end to the tube and at another end to the support element,
- wherein an actuation of the drive device

o from a lower, folded-back position of the headrest initially causes a first displacement of the rod in the tube and thus a pivoting of the headrest into a vertical orientation,
o a further actuation of the drive device causes a joint displacement of the tube and rod into an upper position of the headrest, and
o a final actuation of the drive device causes a further displacement of the rod relative to the tube and thus a pivoting of the headrest into a forward-tilted position.

Compared to the prior art according to EP 3 616 983 B1, the adjustment device according to the invention for a headrest allows an additional adjustment option in which the headrest is in a folded-back position.

Further embodiments of the invention are the subject matter of the dependent claims.

A portion of the rod preferably projects downward out of the tube at the end facing away from the support element, wherein the drive device is attached to this portion by means of a displacement element. The drive device can in particular be formed by a linear actuator, which is coupled at one end to the frame and is operatively connected at the other end to the displacement element.

In order to realize a stable and defined displacement of the tube and rod, it is advantageous if a first spring element is pushed onto the portion of the rod protruding from the tube, which spring element, during the adjustment of the headrest, comes into operative contact at one end with a second (lower) end region of the tube and at another end with the displacement element. Furthermore, a second spring element can be pushed onto the tube at its end facing away from the support element, which spring element comes into operative contact at one end with the frame and at another end with a shoulder attached to the tube. The timed displacement of tube and rod can be further supported by the fact that the first spring element has a higher spring stiffness than the second spring element. In this way, the second spring element is initially compressed and the height of the headrest is adjusted as a consequence before the headrest is tilted forward by compression of the first spring element.

The adjustment of the headrest from the lower, folded-back position to the vertical orientation can be achieved by allowing the rod to perform a first displacement relative to the tube before the first spring element comes into operative contact with the tube. This is realized, for example, by dimensioning the length of the first displacement path of the rod relative to the tube to be greater than the length of the first spring element, so that the upper end of the first spring element only comes into operative contact with the second end region of the tube when the headrest is in the vertical orientation.

Due to the lower spring stiffness of the second spring element, the further actuation of the drive device leads to a joint displacement of the tube and rod into the upper position of the headrest with simultaneous compression of the second spring element. Only the final actuation of the drive device leads to a further displacement of the rod relative to the tube with simultaneous compression of the first spring element.

To limit the pivoting movement of the support element in the lower, folded-back position of the headrest, a stop element can be provided on the support element. Alternatively, the drive device can be stopped in the two end positions (lower, folded-back position or forward-tilted position) using limit switches.

According to a preferred exemplary embodiment, an additional rod is arranged parallel to the end of the rod protruding from the tube and is firmly attached to the tube at one end and is displaceably guided in the displacement element at the other end. Furthermore, a third spring element can be pushed onto the additional rod, which spring element rests with one end on the displacement element and with the other end on a shoulder provided at the end of the additional rod facing away from the tube. In this case, the third spring element is compressed in the lower, folded-back position of the headrest and relaxed in the lower, vertical position, the upper, vertical position and the forward-tilted position of the headrest. The third spring element thus supports the movement of the headrest from the folded-back position to the lower, vertical position. This results in a defined movement even when the headrest is subjected to a load.

The pivoting range of the headrest is at least 100°, preferably at least 110° and most preferably at least 120°, wherein the headrest is in a substantially horizontal orientation in the lower, folded-back position and is thus pivoted by approximately 90° into the lower, vertical position. In the upper, forward-tilted position, the headrest is tilted forwards by preferably about 40° from the vertical.

According to a preferred embodiment of the invention, the height adjustment device comprises two tubes which are mounted parallel to one another and displaceably in the frame, and correspondingly two rods are also provided, with one of the two rods being guided in each of the two tubes.

Further advantages and configurations of the invention are explained in more detail in the following with reference to the following description and the drawing.

In the drawing:
Fig. 1 is a three-dimensional representation of the adjustment device according to the invention for a headrest,
Fig. 2 is a side view of the adjustment device in the lower, folded-back position of the headrest,
Fig. 3 is a side view of the adjustment device in the lower, vertical position of the headrest,
Fig. 4 is a side view of the adjustment device in the upper, vertical position of the headrest, and
Fig. 5 is a side view of the adjustment device in the upper, forward-tilted position of the headrest.

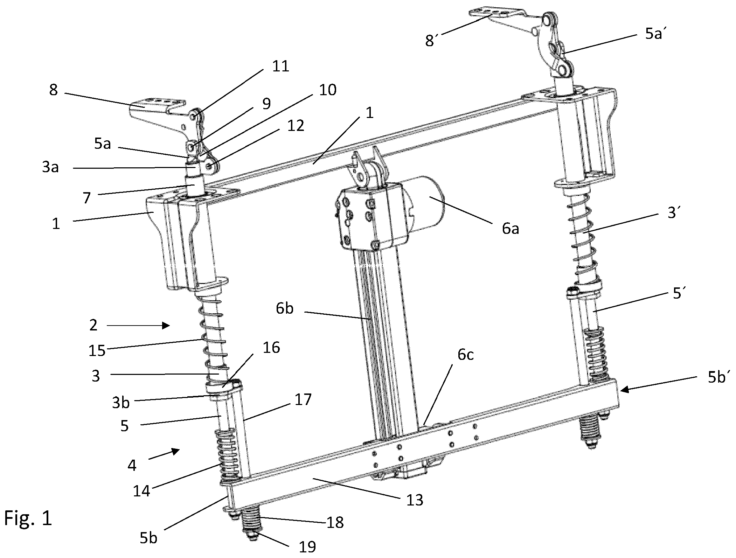

The adjustment device for a headrest shown in Fig. 1 consists substantially of a frame 1, a height adjustment device 2 which comprises at least one tube 3, an inclination adjustment device 4 which comprises a rod 5 guided inside the tube 3, and at least one drive device 6 for displacing the rod 5 and the tube 3.

The tube 3 is displaceably guided in the frame 1 so that the headrest can be adjusted in height relative to the frame 1. The guide of the tube 3 can be formed by a guide tube 7 which is firmly connected to the frame 1.

At an upper end 5a of the rod 5, a support element 8 is mounted pivotably about a pivot axis 9, wherein the support element 8 serves to attach the headrest, which is not shown in detail. The inclination of the support element 8 is adjusted via an articulated arm 10, which is mounted pivotably about a first articulation axis 11 on the support element 8 at one end and about a second articulation axis 12 on a first (upper) end region 3a of the tube 3 at the other end. When the rod 5 is displaced relative to the tube 3, this type of coupling causes a pivoting of the support element 8 about the pivot axis 9 and thus an adjustment of the inclination of a headrest attached to it.

At the end facing away from the support element 8, a portion of the rod 3 projects out of the tube 3 and is coupled with its lower end 5b to the drive device 6 via a displacement element 13. The drive device 6 is formed here by a linear actuator which is coupled at one end to the frame 1 and is operatively connected at the other end to the displacement element 13. The linear actuator has, in a known manner, a spindle 6b which can be rotated by an electric motor 6a and which cooperates with a nut 6c which can be displaced by the rotary movement of the spindle 6b, wherein the displacement element 13 is attached to the nut.

From the illustration according to Fig. 1, it can be seen that the height adjustment device 2 comprises two tubes 3, 3', which are mounted parallel to one another and displaceably in the frame 1, and two rods 5, 5' are also provided accordingly for the inclination adjustment device 4, wherein one of the two rods 5, 5 is guided in each of the two tubes 3, 3'. A support element 8 or 8', respectively, is fastened to each of the two upper ends 5a, 5a'. The headrest to be attached to the adjustment device then extends from one support element 8 to the other support element 8' and is attached to them. The drive device is arranged in a central area between the two tubes 3, 3' or the rods 5, 5'. The displacement element 13 is coupled approximately centrally to the drive device 6 and the lower end 5b of the rod 5 and the lower end 5b' of the rod 5' are attached to its two ends.

A first spring element 14 is pushed onto the portion of the rod 5 protruding from the tube (this naturally also applies to the other rod 3'), which spring element, during the adjustment of the support element 8 or the headrest, comes into operative contact at one end with a second end region 3b of the tube 3 and at another end with the displacement element 13. Furthermore, a second spring element 15 is pushed onto the tube 3 at its end facing away from the support element 8, which spring element comes into operative contact at one end with the frame 1 and at the other end with a shoulder 16 attached to the tube 3. The first spring element 14 has a higher spring stiffness than the second spring element 15.

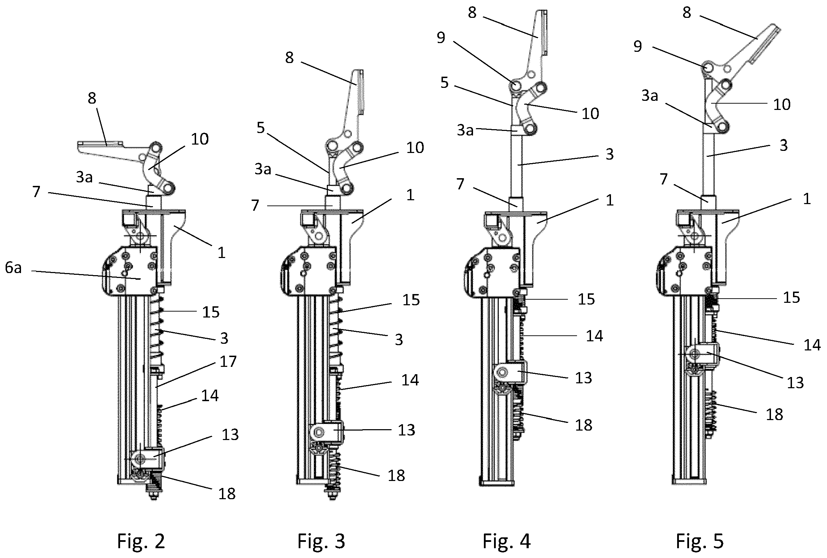

Fig. 1 and 2 show the lower, folded-back position of the support element 8 and the headrest connected thereto. In this position, the spindle nut 6c of the drive device 6 is in a position in which it is at a maximum distance from the electric motor 6a. When the drive device is actuated in the sense of a displacement of the spindle nut 6c in the direction of the electric motor 6a, a first displacement of the rod 5 in the tube 3 occurs at the same time. The rod 5 is guided out of the tube 3 at the first, upper end region 3a of said tub, the articulated arm 10 causing the support element 8 to rotate about the pivot axis 9, so that the headrest is brought from the lower, folded-back, substantially horizontal position into a vertical orientation according to Fig. 3. The second spring element 15 rests with its end regions on the frame 1 or on the shoulder 16, but is not compressed during the pivoting movement of the support element 8 into the vertical position, since the tube 3 is not displaced in the frame 1.

The length of the displacement path of the rod 5 relative to the tube 3 is dimensioned to be so much greater than the length of the first spring element 14 that the upper end of the first spring element 14 only comes into operative contact with the second, lower end region 3b of the tube 3 in the lower, vertical orientation of the headrest (Fig. 3). In the lower, vertical position of the headrest according to Fig. 3, both the first spring element 14 and the second spring element 15 are still completely relaxed.

A further actuation of the drive device 6 then causes a joint displacement of the tube 3 and rod 5 into the upper (vertical) position of the headrest according to Fig. 4. This is achieved in that the second spring element 15 has a lower spring stiffness than the first spring element, so that the further actuation of the drive device 6 causes a joint displacement of the tube 3 and the rod 5 with simultaneous compression of the second spring element 15, while the first spring element 14 still remains relaxed.

The tube 3 is at its stop due to the complete compression of the second spring element 15 and cannot be pushed out further upwards in the frame. Accordingly, a final further actuation of the drive device 6 causes a further displacement of the rod 5 relative to the tube 3 and thus a pivoting of the headrest into a forward-tilted position (Fig. 5). In the process, the first spring element 14 is now also compressed.

If the drive device 6 is then operated in the opposite direction, the spindle nut 6c moves away from the electric motor 6a and causes a corresponding return movement of the support element 8 of the headrest.

If the headrest is subjected to a load during movement between the lower, folded-back position according to Fig. 2 and the lower, vertical position according to Fig. 3, this can lead to an unintentional extension of the tube 3 instead of a movement of the rod 5 within the tube 3. This happens in particular when the load on the headrest is greater than the force of the second spring element 15.

To also achieve a defined adjustment of the headrest in such a situation, in the exemplary embodiment shown, an additional rod 17 is arranged parallel to the lower end of the rod 5 protruding from the tube 3 and is firmly attached to the tube 3 at an upper end and is displaceably guided in the displacement element 13 at the other end. The attachment to the tube 3 can take place, for example, using a suitable attachment clamp.

A third spring element 18 is pushed onto the additional rod 17, which spring element is supported at one end on the displacement element 13 and at the other end on a shoulder 19 which is provided on the end of the additional rod 17 facing away from the tube 3. The third spring element 18 is compressed in the lower, folded-back position of the headrest (Fig. 1 and 2) and relaxed in the lower and upper vertical positions (Fig. 3 and 4) as well as in the forward-tilted position (Fig. 5) of the headrest.

With the adjustment device described above, a pivoting range of the headrest of at least 100°, preferably at least 110° and most preferably at least 120° can be achieved.

In the lower, folded-back position of the headrest (Fig. 1 and 2), the headrest is in an approximately horizontal orientation, whereby it is advantageous for the support element 8 to have a stop element 20 for limiting the pivoting movement of the support element 8 in the lower, folded-back position of the headrest.

## Claims

1. Adjustment device for a headrest having
- a frame (1),
- a height adjustment device (2) comprising at least one tube (3), wherein a support element (8) for attaching the headrest is coupled to a first end region (3a) of the tube (3) and the tube (3) is displaceably guided in the frame (1) so that the headrest can be adjusted in height relative to the frame (1),
- an inclination adjustment device (4) comprising a rod (5) guided inside the tube (3), which rod is coupled at one end (5a) to the support element (8), wherein a displacement of the rod (5) relative to the tube (3) causes a pivoting of the support element (8) about a pivot axis (9) and thus an adjustment of the inclination of the headrest, and
- at least one drive device (6) for displacing the rod (5) and the tube (3),
**characterized in that**
- the pivot axis (9) about which the support element (8) can pivot is provided at one end (5a) of the rod (5),
- the coupling of the support element (8) to the tube (3) takes place via an articulated arm (10), which is connected in an articulated manner at one end to the tube (3) and at another end to the support element (8),
- wherein an actuation of the drive device (6)
o from a lower, folded-back position of the headrest initially causes a first displacement of the rod (5) in the tube (3) and thus a pivoting of the headrest into a lower, vertical orientation,
o a further actuation of the drive device (6) causes a joint displacement of the tube (3) and rod (5) into an upper, vertical position of the headrest, and
o a final actuation of the drive device (6) causes a further displacement of the rod (5) relative to the tube (3) and thus a pivoting of the headrest into an upper, forward-tilted position.

2. Adjustment device according to claim 1, **characterized in that** a portion of the rod (5) projects out of the tube (3) at the end facing away from the support element (8) and the drive device (6) is attached to this portion by means of a displacement element (13).

3. Adjustment device according to claim 1, **characterized in that** the drive device (6) is formed by a linear actuator which is coupled at one end to the frame (1) and is operatively connected at the other end to the displacement element (13).

4. Adjustment device according to claim 1, **characterized in that** a stop element (20) is provided on the support element (8) for limiting the pivoting movement of the support element (8) in the lower, folded-back position of the headrest.

5. Adjustment device according to claim 2, **characterized in that** a first spring element (14) is pushed onto the portion of the rod (2) protruding from the tube (3), which spring element comes into operative contact with a second end region (3b) of the tube (3) and at another end with the displacement element (13) during adjustment of the headrest.

6. Adjustment device according to claim 5, **characterized in that** a second spring element (15) is pushed onto the tube (3) at its end facing away from the support element (8), which spring element comes into operative contact at one end with the frame (1) and at another end with a shoulder (16) attached to the tube (3).

7. Adjustment device according to claim 5 and 6, **characterized in that** the first spring element (14) has a higher spring stiffness than the second spring element (15).

8. Adjustment device according to claim 5 and 6, **characterized in that**
o the actuation of the drive device (6) from the lower, folded-back position of the headrest initially causes the first displacement of the rod (5) in the tube (3) without compression of the first spring element (14),
o the further actuation of the drive device (6) causes a joint displacement of the tube (3) and rod (5) into the upper position of the headrest with simultaneous compression of the second spring element (15), and
o the final actuation of the drive device (6) causes a further displacement of the rod (5) relative to the tube (3) with simultaneous compression of the first spring element (14).

9. Adjustment device according to claim 2, **characterized in that** an additional rod (17) is arranged parallel to the end of the rod (5) protruding from the tube (3) and is firmly attached to the tube (3) at one end and is guided displaceably in the displacement element (13) at the other end.

10. Adjustment device according to claim 9, **characterized in that** a third spring element (18) is pushed onto the additional rod (17), which spring element is supported at one end on the displacement element (13) and at the other end on a shoulder (19) provided on the end of the additional rod (17) facing away from the tube (3).

11. Adjustment device according to claim 8 and 10, **characterized in that** the third spring element (18) is compressed in the lower, folded-back position of the headrest and is relaxed in the lower and upper vertical and the upper, forward-tilted position of the headrest.

12. Adjustment device according to claim 1, **characterized in that** the pivoting range of the headrest is at least 100°.

13. Adjustment device according to one or more of the preceding claims, **characterized in that** the height adjustment device (2) comprises two tubes (3, 3') which are mounted parallel to one another and displaceably in the frame (1), and two rods (5, 5') are also provided accordingly, wherein one of the two rods (5, 5') is guided in each of the two tubes (3, 3').

## Patentansprüche

1. Verstellvorrichtung für eine Kopfstütze mit
- einem Rahmen (1),
- einer Höhen-Verstelleinrichtung (2), die wenigstens ein Rohr (3) umfasst, wobei ein Trägerelement (8) zur Befestigung der Kopfstütze mit einem ersten Endbereich (3a) des Rohrs (3) gekoppelt ist und das Rohr (3) in dem Rahmen (1) verschiebbar geführt ist, sodass die Kopfstütze in ihrer Höhe relativ zum Rahmen (1) verstellbar ist,
- einer Neigungs-Verstelleinrichtung (4), die eine im Inneren des Rohres (3) geführte Stange (5) umfasst, die an ihrem einen Ende (5a) mit dem Trägerelement (8) gekoppelt ist, wobei eine Verschiebung der Stange (5) relativ zum Rohr (3) eine Schwenkung des Trägerelements (8) um eine Schwenkachse (9) und damit eine Verstellung der Neigung der Kopfstütze bewirkt und
- wenigstens einer Antriebseinrichtung (6) zur Verschiebung der Stange (5) und des Rohrs (3),
**dadurch gekennzeichnet, dass**
- die Schwenkachse (9), um welche das Trägerelement (8) schwenkbar ist, an dem einen Ende (5a) der Stange (5) vorgesehen ist,
- die Kopplung des Trägerelements (8) mit dem Rohr (3) über einen Gelenkarm (10) erfolgt, der mit einem Ende gelenkig mit dem Rohr (3) und mit einem anderen Ende gelenkig mit dem Trägerelement (8) verbunden ist,
- wobei eine Betätigung der Antriebseinrichtung (6)
o von einer unteren, nach hinten abgeklappten Stellung der Kopfstütze zunächst eine erste Verschiebung der Stange (5) im Rohr (3) und damit ein Verschwenken der Kopfstütze in eine untere, vertikale Ausrichtung bewirkt,
o eine weitere Betätigung der Antriebseinrichtung (6) eine gemeinsame Verschiebung von Rohr (3) und Stange (5) in eine obere, vertikale Stellung der Kopfstütze bewirkt und
o eine finale Betätigung der Antriebseinrichtung (6) eine weitere Verschiebung der Stange (5) relativ zum Rohr (3) und damit ein Verschwenken der Kopfstütze in eine obere, nach vorne geneigte Stellung bewirkt.

2. Verstellvorrichtung nach Anspruch 1, **dadurch gekennzeichnet, dass** die Stange (5) an dem vom Trägerelement (8) abgewandten Ende mit einem Teilstück aus dem Rohr (3) hinausragt und die Antriebseinrichtung (6) mittels einem Verschiebeelement (13) an diesem Teilstück befestigt ist.

3. Verstellvorrichtung nach Anspruch 1, **dadurch gekennzeichnet, dass** die Antriebseinrichtung (6) durch einen Linearaktuator gebildet ist, der mit einem Ende am Rahmen (1) angekoppelt ist und mit dem anderen Ende mit dem Verschiebeelement (13) in Wirkverbindung steht.

4. Verstellvorrichtung nach Anspruch 1, **dadurch gekennzeichnet, dass** am Trägerelement (8) ein Stoppelement (20) zur Begrenzung der Schwenkbewegung des Trägerelements (8) in der unteren, nach hinten abgeklappten Stellung der Kopfstütze vorgesehen ist.

5. Verstellvorrichtung nach Anspruch 2, **dadurch gekennzeichnet, dass** auf dem aus dem Rohr (3) herausragenden Teilstück der Stange (2) ein erstes Federelement (14) aufgeschoben ist, das während der Verstellung der Kopfstütze mit einem zweiten Endbereich (3b) des Rohres (3) und mit einem anderen Ende mit dem Verschiebeelement(13) in Wirkkontakt kommt.

6. Verstellvorrichtung nach Anspruch 5, **dadurch gekennzeichnet, dass** auf das Rohr (3) an seinem vom Trägerelement (8) abgewandten Ende ein zweites Federelement (15) aufgeschoben ist, das mit einem Ende mit dem Rahmen (1) und mit einem anderen Ende mit einem am Rohr (3) befestigten Absatz (16) in Wirkkontakt kommt.

7. Verstellvorrichtung nach Anspruch 5 und 6, **dadurch gekennzeichnet, dass** das erste Federelement (14) gegenüber dem zweiten Federelement (15) eine höhere Federsteifigkeit aufweist.

8. Verstellvorrichtung nach Anspruch 5 und 6, **dadurch gekennzeichnet, dass**
o die Betätigung der Antriebseinrichtung (6) von der unteren, nach hinten abgeklappten Stellung der Kopfstütze zunächst die erste Verschiebung der Stange (5) im Rohr (3) ohne Kompression des ersten Federelements (14) bewirkt,
o die weitere Betätigung der Antriebseinrichtung (6) eine gemeinsame Verschiebung von Rohr (3) und Stange (5) in die obere Stellung der Kopfstütze unter gleichzeitiger Kompression des zweiten Federelements (15) bewirkt und
o die finale Betätigung der Antriebseinrichtung (6) eine weitere Verschiebung der Stange (5) relativ zum Rohr (3) unter gleichzeitiger Kompression des ersten Federelements (14) bewirkt.

9. Verstellvorrichtung nach Anspruch 2, **dadurch gekennzeichnet, dass** parallel zum aus dem Rohr (3) herausragenden Ende der Stange (5) eine zusätzliche Stange (17) angeordnet ist, die mit einem Ende fest am Rohr (3) befestigt ist und mit dem anderen Ende verschiebbar im Verschiebeelement (13) geführt ist.

10. Verstellvorrichtung nach Anspruch 9, **dadurch gekennzeichnet, dass** auf die zusätzliche Stange (17) ein drittes Federelement (18) aufgeschoben ist, das sich mit einem Ende an dem Verschiebeelement (13) und mit dem anderen Ende an einem Absatz (19) stützt, der am vom Rohr (3) abgewandten Ende der zusätzlichen Stange (17) vorgesehenen ist.

11. Verstellvorrichtung nach Anspruch 8 und 10, **dadurch gekennzeichnet, dass** das dritte Federelement (18) in der der unteren, nach hinten abgeklappten Stellung der Kopfstütze komprimiert und in der unteren und oberen vertikalen und der oberen, nach vorne geneigten Stellung der Kopfstütze entspannt ist.

12. Verstellvorrichtung nach Anspruch 1, **dadurch gekennzeichnet, dass** das der Schwenkbereich der Kopfstütze wenigstes 100° beträgt.

13. Verstellvorrichtung nach einem oder mehreren der vorhergehenden Ansprüche, **dadurch gekennzeichnet, dass** die Höhen-Verstelleinrichtung (2) zwei Rohre (3, 3') umfasst, die parallel zueinander und verschiebbar im Rahmen (1) gehaltert sind und entsprechend auch zwei Stangen (5, 5')vorgesehen sind, wobei in jedem der beiden Rohre (3, 3') eine der beiden Stangen (5, 5')geführt ist.

## Revendications

1. Dispositif de réglage pour un appui-tête ayant :
- un cadre (1),
- un dispositif de réglage en hauteur (2) comprenant au moins un tube (3), dispositif de réglage dans lequel un élément de support (8) servant à fixer l'appui-tête est couplé à une première zone d'extrémité (3a) du tube (3), et le tube (3) est guidé de manière déplaçable dans le cadre (1), de sorte que l'appui-tête peut être réglé en hauteur par rapport au cadre (1),
- un dispositif de réglage d'inclinaison (4) comprenant une tige (5) guidée à l'intérieur du tube (3), tige qui est couplée, au niveau d'une extrémité (5a), à l'élément de support (8), dispositif de réglage dans lequel un déplacement de la tige (5), par rapport au tube (3), provoque un pivotement de l'élément de support (8) autour d'un axe pivot (9), et donc un réglage de l'inclinaison de l'appui-tête, et
- au moins un dispositif d'entraînement (6) servant à déplacer la tige (5) et le tube (3),
**caractérisé en ce que**
- l'axe pivot (9), autour duquel peut pivoter l'élément de support (8), est prévu à une extrémité (5a) de la tige (5),
- le couplage de l'élément de support (8) au tube (5) a lieu via un bras articulé (10) qui est relié de manière articulée, au niveau d'une extrémité, au tube (3) et, au niveau d'une autre extrémité, à l'élément de support (8),
- dispositif de réglage dans lequel un actionnement du dispositif d'entraînement (6),
o à partir d'une position repliée inférieure de l'appui-tête, provoque initialement un premier déplacement de la tige (5) dans le tube (3), et donc un pivotement de l'appui-tête suivant une orientation verticale inférieure,
∘ un actionnement ultérieur du dispositif d'entraînement (6) provoque un déplacement combiné du tube (3) et de la tige (5) dans une position verticale supérieure de l'appui-tête, et
∘ un actionnement final du dispositif d'entraînement (6) provoque un déplacement ultérieur de la tige (5) par rapport au tube (3), et donc un pivotement de l'appui-tête dans une position supérieure inclinée vers l'avant.

2. Dispositif de réglage selon la revendication 1, **caractérisé en ce qu'**une partie de la tige (5) dépasse du tube (3) au niveau de l'extrémité placée à l'opposé de l'élément de support (8), et le dispositif d'entraînement (6) est fixé sur cette partie au moyen d'un élément de déplacement (13).

3. Dispositif de réglage selon la revendication 1, **caractérisé en ce que** le dispositif d'entraînement (6) est formé par un actionneur linéaire qui, au niveau d'une extrémité, est couplé au cadre (1) et qui, au niveau de l'autre extrémité, est fonctionnellement relié à l'élément de déplacement (13).

4. Dispositif de réglage selon la revendication 1, **caractérisé en ce qu'**un élément de butée (20) est prévu sur l'élément de support (8), afin de limiter le mouvement de pivotement de l'élément de support (8) dans la position repliée inférieure de l'appui-tête.

5. Dispositif de réglage selon la revendication 2, **caractérisé en ce qu'**un premier élément à ressort (14) est poussé sur la partie de la tige (5) dépassant du tube (3), lequel premier élément à ressort, au cours du réglage de l'appui-tête, vient en contact fonctionnel avec une seconde zone d'extrémité (3b) du tube (3) et, au niveau d'une autre extrémité, vient en contact fonctionnel avec l'élément de déplacement (13).

6. Dispositif de réglage selon la revendication 5, **caractérisé en ce qu'**un deuxième élément à ressort (15) est poussé sur le tube (3) au niveau de son extrémité placée à l'opposé de l'élément de support (8), lequel deuxième élément à ressort vient en contact fonctionnel, au niveau d'une extrémité, avec le cadre (1) et, au niveau d'une autre extrémité, vient en contact fonctionnel avec un épaulement (16) fixé sur le tube (3).

7. Dispositif de réglage selon les revendications 5 et 6, **caractérisé en ce que** le premier élément à ressort (14) a une rigidité de ressort supérieure à celle du deuxième élément à ressort (15).

8. Dispositif de réglage selon les revendications 5 et 6, **caractérisé en ce que**
∘ l'actionnement du dispositif d'entraînement (6) à partir de la position repliée inférieure de l'appui-tête provoque initialement le premier déplacement de la tige (5) dans le tube (3), sans compression du premier élément à ressort (14),
∘ l'actionnement ultérieur du dispositif d'entraînement (6) provoque un déplacement combiné du tube (3) et de la tige (5) dans la position supérieure de l'appui-tête, avec une compression simultanée du deuxième élément à ressort (15), et
∘ l'actionnement final du dispositif d'entraînement (6) provoque un déplacement ultérieur de la tige (5) par rapport au tube (3), avec une compression simultanée du premier élément à ressort (14).

9. Dispositif de réglage selon la revendication 2, **caractérisé en ce qu'**une tige supplémentaire (17), qui est agencée parallèlement à l'extrémité de la tige (5) dépassant du tube (3), est, au niveau d'une extrémité, solidement fixée au tube (3) et, au niveau de l'autre extrémité, est guidée de manière déplaçable dans l'élément de déplacement (13).

10. Dispositif de réglage selon la revendication 9, **caractérisé en ce qu'**un troisième élément à ressort (18) est poussé sur la tige supplémentaire (17), lequel troisième élément à ressort est supporté, au niveau d'une extrémité, sur l'élément de déplacement (13) et, au niveau de l'autre extrémité, est supporté sur un épaulement (19) prévu sur l'extrémité de la tige supplémentaire (17), ladite extrémité étant placée à l'opposé du tube (3).

11. Dispositif de réglage selon les revendications 8 et 10, **caractérisé en ce que** le troisième élément à ressort (18), qui est comprimé dans la position repliée inférieure de l'appui-tête, est détendu dans les positions verticales inférieure et supérieure, ainsi que dans la position supérieure inclinée vers l'avant de l'appui-tête.

12. Dispositif de réglage selon la revendication 1, **caractérisé en ce que** la plage de pivotement de l'appui-tête est au moins de 100°.

13. Dispositif de réglage selon l'une quelconque ou plusieurs des revendications précédentes, **caractérisé en ce que** le dispositif de réglage en hauteur (2) comprend deux tubes (3, 3') qui sont montés parallèlement l'un à l'autre et de manière déplaçable dans le cadre (1), et deux tiges (5, 5') sont également prévues en conséquence, dispositif de réglage dans lequel une des deux tiges (5, 5') est guidée dans chacun des deux tubes (3, 3').
